# EUROPÄISCHE PATENTSCHRIFT

(11) **EP 0 496 102 B1**
(45) Veröffentlichungstag und Bekanntmachung des Hinweises auf die Patenterteilung: **26.10.1994**
(21) Anmeldenummer: 91122072.1
(22) Anmeldetag: 21.12.1991
(51) Int. Cl.: A01N 25/34, B65D 83/00

(54) **Vorrichtung zur Abgabe von Pheromonen**
Device for diffusion of pheromones
Dispositif pour diffuser des phéromones

(30) Priorität: 23.01.1991 DE 4101878
(43) Veröffentlichungstag der Anmeldung: 29.07.1992
(73) Patentinhaber: BASF Aktiengesellschaft, 67063 Ludwigshafen (DE)
(72) Erfinder: Neumann, Ulrich, Dr., W-6707 Schifferstadt (DE); Buehrle, Hans, W-6703 Limburgerhof (DE); Renz, Guenter, Dr., W-6800 Mannheim 31 (DE); Buschmann, Ernst, Dr., W-6700 Ludwigshafen (DE)

(56) Entgegenhaltungen:
- EP-A- 0 273 197
- EP-A- 0 402 826
- US-A- 4 793 555
- US-A- 4 915 301

## Beschreibung

Die vorliegende Erfindung betrifft eine Vorrichtung bzw. ein Mittel zur Abgabe von Pheromonen der Klasse der Sexuallockstoffe an eine Umgebung.

Um einer möglichen Resistenz verschiedener Schadinsekten gegenüber insektiziden Wirkstoffen vorzubeugen sowie den Einsatz dieser Stoffe mengenmäßig zu begrenzen, nutzt man in neuerer Zeit im Pflanzenschutz die Möglichkeit, das Verhalten bestimmter Insektenarten durch Pheromone spezifisch zu manipulieren. Mittels der sogenannten "Monitortechnik" werden für einzelne Insektenarten charakteristische Werte wie Flugmaximum und Populationsdichte erfaßt, wodurch Zeitpunkt und Menge des auszubringenden Wirkstoffs festgelegt werden können. Die Anwendung von Pheromonen nach der sogenannten "Mating Disruption"-Methode ermöglicht dann eine großflächige Bekämpfung bestimmter Schadinsekten ohne Einsatz von Insektiziden. Hierzu werden größere Mengen eines artspezifisch wirkenden Pheromons ausgebracht. Durch dieses Überangebot an Pheromon werden die Antennenrezeptoren der männlichen Insekten derart überreizt, daß das Auffinden des Weibchens und damit die Fortpflanzung unterbleibt.

Speziell bei der Anwendung von Pheromonen im Wein- und Obstbau wird die Möglichkeit einer punktuellen Ausbringung von wirkstoffhaltigen Großdispensern genutzt. Hierdurch wird das Pheromon gegenüber der Luftapplikation (uniforme Dampfwolke) an "wenigen'' Stellen konzentriert (Punktquellen), wodurch längere Wirkzeiten resultieren.

Die z.Z. angewandten Dispenser lassen sich generell in "Matrix"- und "Reservoir"-Systeme einteilen. Wie der Name schon sagt, ist bei Matrixsystemen der Wirkstoff in einer Matrix homogen verteilt, während sich bei Reservoirsystemen der Wirkstoff in konzentrierter oder verdünnter Form in einem Vorratsbehälter befindet. Matrixsysteme haben generell den gravierenden Nachteil, daß, bedingt durch ihren Aufbau, die Abgabe einem Zeitgesetz 1. Ordnung folgt und daher nicht gleichförmig über einen längeren Zeitraum erfolgt. Zur Anwendung kommen hier z.B. dreischichtige, mit Pheromon imprägnierte Weich-PVC-Folien (DE-OS 27 40 497), die innerhalb von ca. 6 Wochen bis zu 80 % des Wirkstoffes abdampfen. Wie erwartet kommt es anfänglich zu einer überhöhten Freisetzungsgeschwindigkeit und damit überdosierung des Wirkstoffes. Eine kontrollierte Bekämpfung von Schadinsekten durch solche "Matrixsysteme" ist somit nicht möglich. Zu den Reservoirsystemen zählen z.B. flexible Rohrköprer aus einem polymeren Material, vorzugsweise einem Polyethylen hoher Dichte, wobei die Bohrung des Rohrköprers mit dem Wirkstoff gefüllt ist (EP 0 061 192, EP 0 160 151, US 4 600 146). Bei einer vorgegebenen Länge der Abdampfkörper von ca. 20 cm steht jedoch nur ein begrenzter Hohlraum zur Aufnahme des Wirkstoffs zur Verfügung, womit die Wirkungsdauer dieser Verdampfungskörper auf eine zu kurze Zeit beschränkt ist.

Gefordert sind vielmehr Abgabevorrichtungen, mit denen mehrere Generationen von Schadinsekten erfaßt werden, also Wirkzeiten von mindestens 6 Monaten und mehr. Auch ist zum Ausbringen der Abgabevorrichtungen ein Vielfaches an Mehrarbeit notwendig, da sie umständlich mit beiden Händen an Zweigen oder Ästen verknotet werden müssen. Dies hat zur Folge, daß nach Abgabe des Wirkstoffes an die Umgebung die leeren Kunststoffgebinde kaum wieder eingesammelt werden und damit eine zunehmende Umweltbelastung erfolgt.

Ein weiteres Reservoirsystem stellen Folienbeutel dar, die aus thermoplastischen Kunststoff-Filmen gefertigt und mit Pheromon gefüllt werden (EP 0 194 896, JP 245 418). Allerdings sind diese Dispenser aufgrund der geringen Wandstärken anfällig gegenüber äußeren Einwirkungen. Zudem kommt es bei starker Sonneneinstrahlung zu einem Aufblähen der Beutel, das zum Aufreißen der Folien führen kann. Ein weiterer Nachteil dieser Foliensysteme ist, daß sie nicht sicher genug befestigt werden können, um bei einer automatisierten Ernteeinbringung nicht in das Erntegut zu gelangen.

Mit den größer werdenden Flächen, die mit Pheromonen behandelt werden und dem steigenden Bedarf an Dispensern wird in zunehmendem Maße eine Lagerung der produzierten Dispenser erforderlich. Diese ist deshalb problematisch, da die eigentliche Aufgabe der Verdampfungskörper, die Pheromonfreisetzung, während der Lagerung verhindert werden muß. Wie in den Vorversuchen gezeigt werden konnte, ist es dazu nicht ausreichend die Dispenser in pheromondichte Verpackungen einzubringen. Jedes zur Verfügung stehende Dampfvolumen wird von verdampfendem Pheromon ausgefüllt, das teilweise aufgrund von Temperaturschwankungen in der Verpackung wieder kondensiert. Wirkstoff, der sich nach der Lagerung in der Verpackung befindet, steht zum Abdampfen nicht mehr zur Verfügung und muß als Verlust gewertet werden.

Alternativ könnte an eine Lagerung in Kühllagern gedacht werden, um die Diffusion des Wirkstoffes durch die Behälterwand zu unterbinden. Allerdings sind gekühlte Lagerräume sehr kostspielig und stehen nicht immer zur Verfügung.

Es war daher die Aufgabe der vorliegenden Erfindung unter Verwendung einfacher Verdampfungskörper die langsame und kontinuierliche (lineare) Freisetzung von artspezifisch wirkenden Sexuallockstoffen über einen Zeitraum von mehreren Monaten zu garantieren, wobei die Möglichkeit bestehen soll, erst nach der Ausbringung der Behälter die Freisetzung des Wirkstoffes zu starten, um Verluste während einer Lagerzeit zu vermeiden. Gleichzeitig sollte durch eine wirksame Aufhängevorrichtung das Ausbringen der Behälter erleichtert und die Kontaminierung des Erntegutes durch abfallende Dispenser gerade beim automatisierten Erntevorgang vermieden werden.

Diese Aufgabe wird durch die kennzeichnenden Merkmale der Patentansprüche 1 bis 6 gelöst.

Wir haben nun gefunden, daß sich eine gleichmäßige, einem Zeitgesetz 0. Ordnung folgende Wirkstoffabgabe von Sexuallockstoffen nur dann erreichen läßt, wenn die den Lockstoff enthaltende Kammer bezüglich des Verhältnisses von Oberfläche zu Volumen bestimmte Voraussetzungen erfüllt. Bei einer im Vergleich zum Volumen großen Oberfläche der Pheromonkammer, wie z.B. bei Röhrchen-Dispensern, hängt die Abgaberate vom jeweiligen Füllstand der Kammer ab. Wie nun gefunden wurde ist dies nicht mehr der Fall, wenn das Verhältnis von Oberfläche zu Volumen der Pheromonkammer zwischen 2 und 8 cm⁻¹ liegt, vorzugsweise zwischen 3,7 und 6,2 cm⁻¹.

Völlig überraschend wurde auch gefunden, daß das Abgabeverhalten des Behälters vom Kunststoffanteil pro Dispenser abhängig ist. So wurde an gelagerten und praktisch identischen Pheromonbehältern ein gänzlich unterschiedliches Abgabeverhalten gefunden, wenn an einem Teil der Behälter nur die Aufhängevorrichtung entfernt wurde. Erstaunlicherweise gaben die Behälter mit angeformter Aufhängung in den ersten Wochen sehr viel mehr Wirkstoff ab als die ohne diese Vorrichtung. Die Abgaberate ist unseren Versuchen zufolge in der ersten Zeit nach dem Ausbringen um so höher, je höher der Kunststoffanteil des Behälters ist. Um diese Verluste an Wirkstoff zu Beginn der Aushangzeit zu vermeiden und als weitere Voraussetzung für eine auch in der Anfangsphase lineare Pheromonabgabe ist es deshalb notwendig den Kunststoffanteil des Behälters möglichst klein zu halten. Bei einem vorgegebenen Kammervolumen sollte die "Behälterdichte", also das Verhältnis Behältergewicht zu Volumen einer Kammer unter 1,5 g/cm³, vorzugsweise zwischen 0,8 und 0,2 g/cm³ liegen. Weitere Vorteile, die eine Reduzierung des Kunststoffanteils mit sich bringt, sind die Kostenreduzierung bei Produktion, Verpackung und Lagerung, sowie die Verringerung des Kunststoffanteils, der in die Umwelt gelangt.

Behälter mit den im Anspruch geforderten Eigenschaften lassen sich am einfachsten aus thermoplastischen Kunststoffen mit den Methoden des Blasformens, Doppelstreckziehens oder Thermoformens herstellen. Die im Anspruch angeführten Thermoplaste, dazu zählen auch Polyethylen-Copolymerisate mit Propylen, Vinylacetaten und Acrylsäure(derivaten) sowie biologisch abbaubare Thermoplaste, wie z.B. Polyhdroxybuttersäure bzw. deren Copolymerisate mit Hydroxyvaleriansäure, sind aufgrund ihrer Permeabilität zur Wirkstoffabgabe bestens geeignet. Infolge der guten Durchlässigkeit tritt bei diesen thermoplastischen Kunststoffen in dem den Lockstoff aufnehmenden Behälter kein Unterdruck auf, da die Gase der Luft auch von außen nach innen durch die Wand des Behälter diffundieren.

Die Permeationsrate kann in Abhängigkeit vom Sexuallockstoff über die Zusammensetzung und Dichte des Kunststoffes sowie über die Wanddicke des Behälters (Dispenser) eingestellt werden. Die den Lockstoff aufnehmenden Behälter (Dispenser) sollten gemäß den Untersuchungen Wanddicken von 0,1 bis 1,2 mm, besonders jedoch Wanddicken von 0,2 bis 0,8 mm aufweisen. Beim gleichen Material wird bei einer Wanddicke von 0,1 mm eine hohe Permeationsrate und bei einer Wanddicke von 1 mm eine geringe Permeationsrate festgestellt. Um eine Lichtschädigung des Lockstoffes zu vermeiden, können die Behälter (Dispenser) deckend eingefärbt sein. Die Einfärbung kann gleichzeitig zur Kennzeichnung des Lockstoffes bei Ausbringung von verschiedenen Lockstoffen dienen. Durch eine mitgeformte Prägung auf dem Behälter kann das Ausbringungsjahr gekennzeichnet werden. Die Behälter (Dispenser) werden bei Herstellung nach dem Blasformen, Doppelstreckziehen oder Thermoformen gleichzeitig mit einer Befestigungseinrichtung ausgestattet, die ein einfaches und schnelles Anbringen der Abgabevorrichtung an einem Zweig oder Ast mit einer Hand ermöglicht.

Wie oben schon erwähnt, ist die Lagerung der Pheromonbehälter problematisch, da es zum Verdapfen des Wirkstoffes in die Verpackung kommt. Wie wir gefunden haben, läßt sich dieses Abdampfen in der Verpackung durch einen gegenüber dem Pheromon dichten Überzug auf der Ampullenoberfläche verhindern. Polymere Materialien, die dafür Verwendung finden, sollten beispielsweise aus Polyamid, Polyvinylalkohol oder Polyester bestehen, und vorzugsweise wasserlöslich sein. Die Aufbringung auf die Ampullenoberfläche erfolgt einfach aus den entsprechenden Lösungen durch Tauch- bzw. Spritzverfahren, wodurch der Überzug der Behälteroberfläche exakt angepaßt werden kann. Bei sehr einfach geformten Abdampfkörpern ist es auch denkbar, eine entsprechende Schicht direkt als Film auf die Oberfläche aufzubringen. Hierbei muß allerdings darauf geachtet werden, daß die gesamte Oberfläche mit dem Film bedeckt ist.

Nach der Lagerung, kurz vor dem Ausbringen der Pheromonbehälter wird die Schicht dann durch Abziehen bzw. durch Abwaschen des Filmes entfernt. In regenreichen Ländern kann das Entfernen eines wasserlöslichen überzuges auch durch Niederschlag erfolgen. Danach ist das Abdampfverhalten dieser Pheromonbehälter wieder ganz entsprechend dem von unbehandelten Verdampfungskörpern. Durch eine derartige Sperrschicht lassen sich somit Lagerverluste verringern bzw. gänzlich vermeiden und gleichzeitig entfallen andere aufwendige Verpackungsmethoden bzw. kostenintensive Kühllagerung der Behälter.

Im Falle eines Aufreihens der Behälter (Dispenser) auf eine Schnur und plazieren in Abständen von 0,5 bis 10 m wird eine Applikation möglich, die erstens zeit- und arbeitsersparend ist (keine mühevolle Einzelapplikation), zweitens die Anwendung einer hohen Punktquellenzahl (10.000 Dispensern und mehr pro Hektar) ermöglicht und drittens ein einfaches Einsammeln der verbrauchten Behälter ermöglicht, was dem zunehmenden Umweltbewußtsein entgegenkommt. Die Verwendung von Behältnissen (Dispensern) mit einem Zwei- oder Mehrkammersystem ermöglicht zudem die gleichzeitige Bekämpfung verschiedener Schadinsekten ohne zusätzlichen Arbeitsaufwand jedoch die Reduzierung des Materialaufwandes auf die Hälfte oder mehr.

Ausführungsformen der Erfindung werden nachstehend an Hand der Zeichnungen näher erläutert.

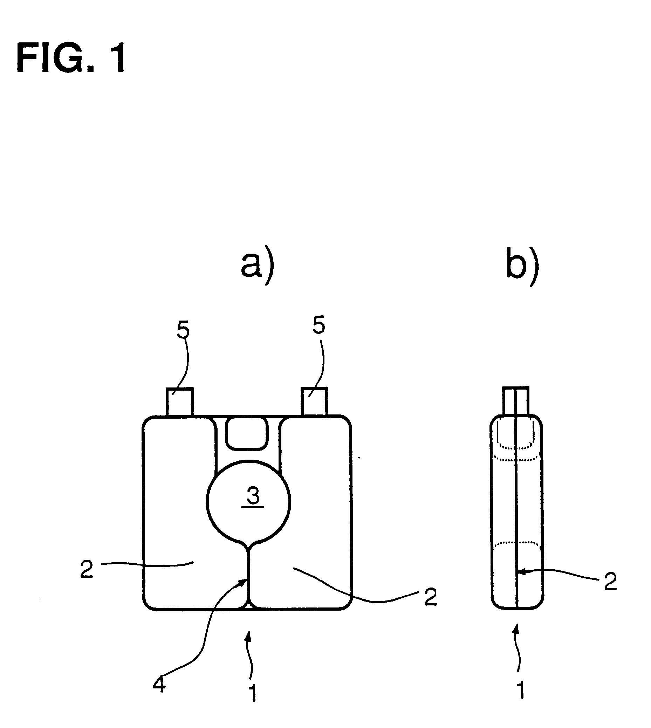

Figur 1a zeigt die Vorderansicht eines erfindungsgemäßen Pheromonbehälters 1 mit beispielsweise zwei Kammern 2. Die Befüllstutzen 5 werden nach dem Einbringen des Pheromons durch Verschweißen verschlossen. Eine Aufhängevorrichtung, bestehend aus einem Befestigungsloch 3 und einem Schlitz 4, dient zum leichten Anbringen des Behälters an einer Befestigungsstelle (Zweig, Draht, etc.) und verhindert gleichzeitig das Abfallen des Behälters bei Krafteinwirkung, z.B. durch Wind oder automatische Erntemaschinen.

Figur 1b zeigt den Pheromonbehälter gemäß Figur 1a in Seitenansicht.

### Beispiel 1

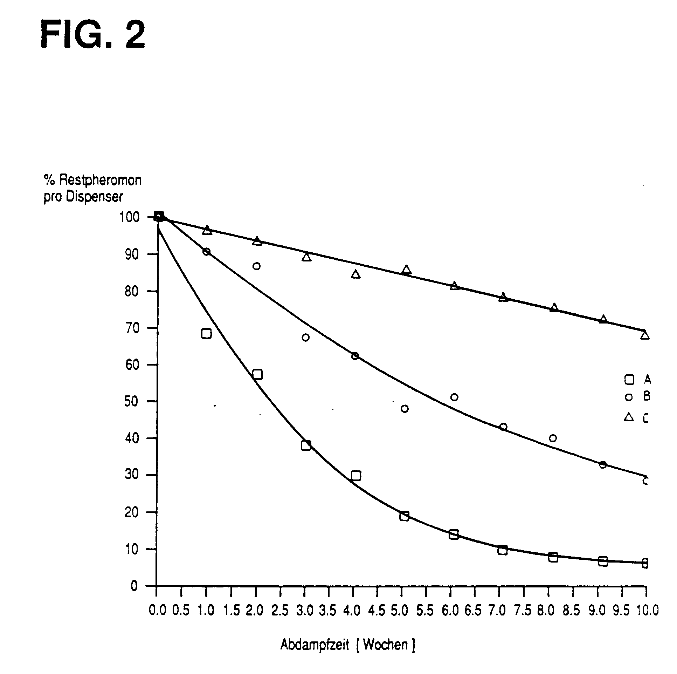

Figur 2 zeigt einen Vergleich des Abdampfverhaltens von Z9-Dodecenylacetat (Z9-DDA) aus einer der Erfindung gemäßen Abgabevorrichtung mit den Abgabesystemen, die im Stand der Technik beschrieben wurden.
A: laminates System
B: flexibler Hohlkörper, dessen Bohrung mit Wirkstoff gefüllt ist
C: erfindungsgemäßer Abdampfkörper
Die Abbildung zeigt deutlich den gravierenden Nachteil des Matrixsystems (Probe A) gegenüber den Reservoirsystemen (B und C), nämlich das starke Abweichen vom linearen Abgabeverhalten. Zudem hat das laminate System bereits innerhalb von 6 Wochen ca. 80 % seines Wirkstoffanteils abgegeben.

Obwohl beide Proben, B und C, Reservoirsysteme darstellen, zeigt nur der erfindungsgemäße Behälter C mit den im Anspruch aufgeführten Voraussetzungen eine exakt lineare Abgabekurve. Außerdem sind nach dem erfindungsgemäßen Verfahren in einem Zeitraum von ebenfalls 6 Wochen erst 20 % des Wirkstoffes gegenüber 45 % bei Probe B verbraucht. Damit ist die Abdampfdauer beim Behälter C sehr viel länger als bei Probe B.

### Beispiel 2

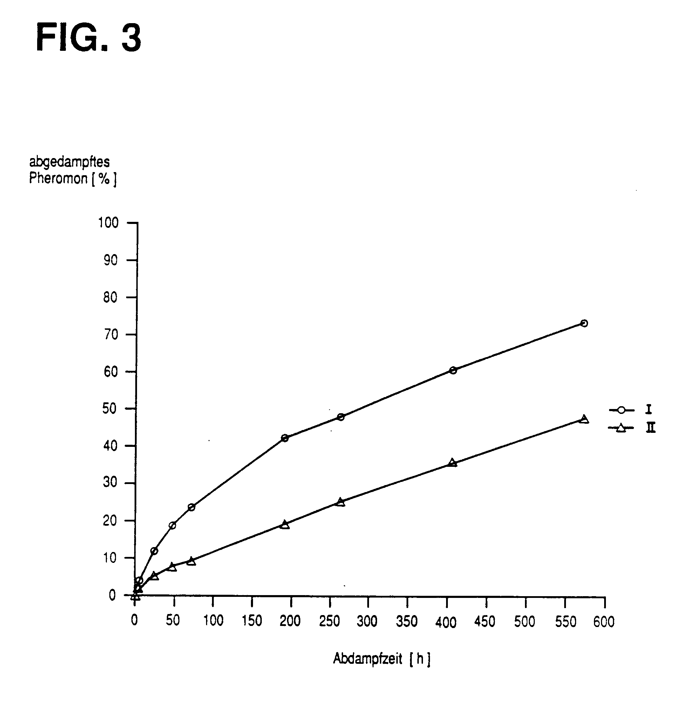

Figur 3 zeigt das Abdampfverhalten von Dispensern mit gleicher Kammerwandstärke, aber einer "Behälterdichte" über (I) und unter (II) 1,5 g/cm³. Kurve I beschreibt das Abdampfverhalten eines Pheromonbehälters mit Dichte 2,1 g/cm³, Kurve II eines Pheromonbehälters mit Dichten 0,6 g/cm³.

Deutlich erkennt man, daß der Dispenser mit dem höheren Kunststoffanteil (I) in den ersten 2 Wochen etwa doppelt soviel Wirkstoff abgibt wie II. Erst nach ca. 3 Wochen ergibt sich ebenfalls eine gleichmäßige Wirkstoffabgabe. Eine über den gesamten Abgabezeitraum lineare Abgaberate erhält man aber nur mit dem Behälter, der die erfindungsgemäßen Vorgaben einhält.

### Beispiel 3

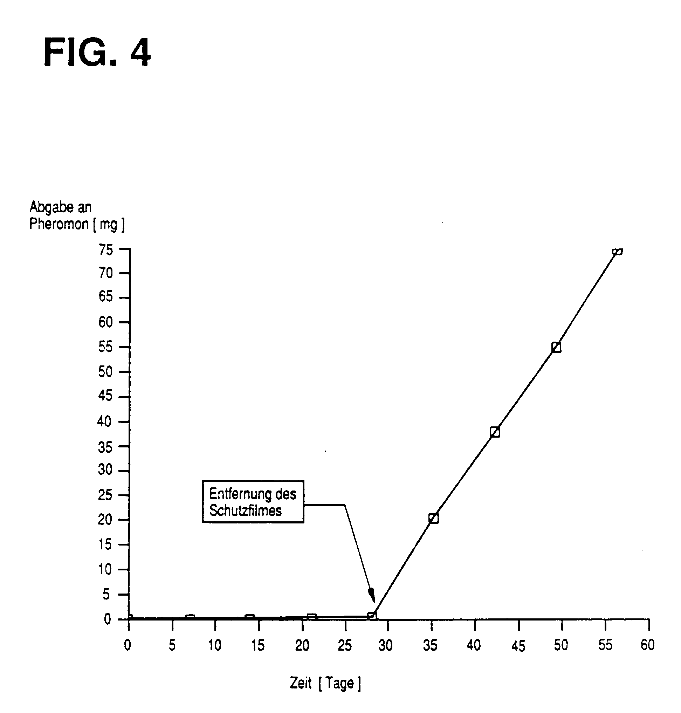

Figur 4 zeigt das Abdampfverhalten eines Pheromonbehälters, der mit einer wasserlöslichen Polyvinylalkohol-Schicht überzogen ist. Solange die Schicht die Oberfläche des Behälters bedeckt, ist keine bzw. nur eine geringfügige Wirkstoffabgabe zu beobachten. Erst nachdem der Sperrfilm entfernt wurde, (Markierung) beginnt der Behälter mit der konstanten Freisetzung des Pheromons.

Nachfolgende Beispiele demonstrieren das für Reservoir-Systeme charakteristische konstante Abdampfverhalten:

### Beispiel 4

Pheromon Z9-Dodecenylacetat, abgedampft werden 10 Proben à 300 mg (100 %) unter Laborbedingungen (21 bis 22°C, Windgeschwindigkeit ca. 0,8 m/sek) aus einem Polyethylenbehälter mit einer Wandstärke von 0,6 mm.

| Zeit (Wochen) | Restwert (%) | durchschnittliche Abgaberate (mg/dxAmpulle) |
|---|---|---|
| 0 | 100 | -.- |
| 3 | 91 | 1.0 |
| 6 | 82 | 1.0 |
| 9 | 69 | 1.2 |
| 12 | 50 | 1.0 |
| 15 | 42 | 0.9 |
| 18 | 31 | 1.2 |

### Beispiel 5

Pheromon Z9/Z11-Tetradecenylacetat, abgedampft werden 10 Proben a 400 mg (100 %) unter Laborbedingungen (21 bis 22°C, Windgeschwindigkeit ca. 0,9 m/sek) aus einem Polyethylenbehälter mit einer Wandstärke von 0,35 mm.

| Zeit (Wochen) | Restwert (%) | durchschnittliche Abgaberate (mg/dxAmpulle) |
|---|---|---|
| 0 | 100 | -.- |
| 3 | 88 | 1.8 |
| 6 | 74 | 2.0 |
| 9 | 61 | 2.0 |
| 12 | 48 | 1.9 |
| 15 | 34 | 2.0 |
| 18 | 22 | 1.8 |

## Patentansprüche

1. Vorrichtung zur Abgabe von Pheromonen der Klasse der Sexuallockstoffe aus Kunststoffbehältern mit einer Wandstärke von 0,1 bis 1,2 mm, vorzugsweise 0,2 bis 0,8 mm, an eine Umgebung, dadurch gekennzeichnet, daß die Pheromonbehälter ein Oberfläche zu Volumen Verhältnis von 2 bis 8 cm⁻¹, vorzugsweise von 3,7 bis 6,2 cm⁻¹ und ein Verhältnis von Kunststoffgewicht zu Volumen pro Kammer unter 1,5 g/cm³, vorzugsweise von 0,2 bis 0,8 g/cm³, aufweisen.

2. Vorrichtung gemäß Anspruch 1, dadurch gekennzeichnet, daß die Behälter aus thermoplastischen Kunststoffen, vorzugsweise Polyethylen, Polypropylen, Polyester, Polyamid oder biologisch abbaubaren Materialien, wie Polyhydroxybuttersäure, bestehen.

3. Vorrichtung gemäß Anspruch 1 und 2, dadurch gekennzeichnet, daß die Behälteroberfläche mit einem gegenüber dem Pheromonbehälterinhalt dichten Überzug beschichtet wird, der im Bedarfsfalle von der Behälteroberfläche entfernt wird.

4. Vorrichtung gemäß Anspruch 1 bis 3, dadurch gekennzeichnet, daß der Überzug aus polymeren Materialien wie z.B. Polyamid, Polyvinylalkohol oder Polyester besteht und vorzugsweise wasserlöslich ist.

5. Vorrichtung gemäß Anspruch 1 bis 4, dadurch gekennzeichnet, daß die Kunststoffbehälter als Zwei- bzw. Mehrkammersysteme zur gleichzeitigen Bekämpfung von zwei oder mehreren Schädlingen ausgebildet und mit einer Aufhängevorrichtung versehen sind.

6. Vorrichtung gemäß Anspruch 1 bis 5, dadurch gekennzeichnet, daß die Kunststoffbehälter auf einer Schnur aufgereiht und in Abständen von 0,5 bis 10 m plaziert sind.

## Claims

1. An apparatus for releasing pheromones of the sex attractants class from plastic containers having a wall thickness of from 0.1 to 1.2 mm, preferably from 0.2 to 0.8 mm, to a surrounding area, wherein the pheromone containers have a surface to volume ratio of from 2 to 8 cm⁻¹, preferably of from 3.7 to 6.2 cm⁻¹, and a ratio of plastic weight to volume per chamber of below 1.5 g/cm³, preferably of from 0.2 to 0.8 g/cm³.

2. An apparatus as claimed in claim 1, wherein the containers consist of thermoplastics, preferably polyethylene, polypropylene, polyester, polyamide or biodegradable materials, such as polyhydroxybutyric acid.

3. An apparatus as claimed in claim 1 or 2, wherein the container surface is coated with a coating which is impervious to the pheromone container contents and which is removed from the container surface as necessary.

4. An apparatus as claimed in any of claims 1 to 3, wherein the coating consists of polymeric materials such as e.g. polyamide, polyvinyl alcohol or polyester and is preferably water-soluble.

5. An apparatus as claimed in any of claims 1 to 4, wherein the plastic containers are designed as two- or multi-chamber systems for the simultaneous control of two or more pests and are provided with a suspension apparatus.

6. An apparatus as claimed in any of claims 1 to 5, wherein the plastic containers are strung on a cord and positioned at intervals of from 0.5 to 10 m.

## Revendications

1. Dispositif pour diffuser des phéromones de la classe des matières exerçant une attraction sexuelle à partir de conteneurs en matière synthétique ayant une épaisseur de paroi de 0,1 à 1,2 mm, de préférence de 0,2 à 0,8 mm, dans un environnement, caractérisé en ce que les conteneurs de phéromones présentent un rapport de leurs surfaces à leurs volumes de 2 à 8 cm⁻¹, de préférence de 3,7 à 6,2 cm⁻¹ et un rapport de poids de matière synthétique aux volumes inférieurs à 1,5 g/cm³ par enceinte, de préférence de 0,2 à 0,8 g/cm³.

2. Dispositif selon la revendication 1, caractérise en ce que les conteneurs sont constitués de matières synthétiques thermoplastiques, de préférence de polyéthylène, de polypropylène, de polyester, de polyamide ou de matières biologiquement dégradables, telles que le poly(acide hydroxybutyrique).

3. Dispositif selon la revendication 1 ou 2, caractérisé en ce que la surface des conteneurs est recouverte d'un revêtement étanche vis-à-vis du contenu des conteneurs de phéromones, ce revêtement pouvant être enlevé de la surface des conteneurs en cas de besoin.

4. Dispositif selon l'une quelconque des revendications 1 à 3, caractérisé en ce que le revêtement est constitué de matières polymères telles que par exemple le polyamide, le poly(alcool vinyliquue) ou le polyester et est de préférence hydrosoluble.

5. Dispositif selon l'une quelconque des revendications 1 à 4, caractérisé en ce que les conteneurs en matière synthétique sont constitués sous forme de systèmes à deux ou plusieurs enceintes pour combattre simultanément deux ou plusieurs types de parasites et comportent un dispositif de suspension.

6. Dispositif selon l'une quelconque des revendications 1 à 5, caractérisé en ce que les conteneurs en matière synthétique sont alignés sur une corde et placés à des distances de 0,5 à 10 m les uns par rapport aux autres.
